# EUROPÄISCHE PATENTSCHRIFT

(11) **EP 3 710 706 B1**
(45) Veröffentlichungstag und Bekanntmachung des Hinweises auf die Patenterteilung: **24.04.2024**
(21) Anmeldenummer: 18795352.6
(22) Anmeldetag: 19.10.2018
(51) Int. Cl.: F04D 13/06, F04D 29/02, H02K 5/10, H02K 7/14, H02K 15/10

(54) **WASSERPUMPE UND VERFAHREN ZUR HERSTELLUNG EINER WASSERPUMPE**
WATER PUMP AND METHOD FOR MANUFACTURING A WATER PUMP
POMPE À EAU ET PROCÉDÉ DE FABRICATION D'UNE POMPE À EAU

(30) Priorität: 13.11.2017 DE 102017220157
(43) Veröffentlichungstag der Anmeldung: 23.09.2020
(73) Patentinhaber: Hanon Systems EFP Deutschland GmbH, 61352 Bad Homburg v.d.Höhe (DE)
(72) Erfinder: ARNOLDI, Ernesto Giovanni, 10062 Luserna S. Giovanni TO (IT); MAURINO, Paolo Lincoln, 12031 Bagnolo Piemonte (CN) (IT)
(74) Vertreter: Hoffmann Eitle
(86) Internationale Anmeldenummer: PCT/EP2018/078808
(87) Internationale Veröffentlichungsnummer: WO 2019/091763

(56) Entgegenhaltungen:
- EP-A1- 2 882 077
- EP-A2- 1 422 809
- WO-A1-2008/072438
- WO-A2-2004/008603
- CN-A- 105 262 263
- CN-A- 105 337 454
- DE-A1- 4 109 548
- DE-A1-102006 008 423

## Beschreibung

Die Erfindung bezieht sich auf eine Wasserpumpe mit einem Pumpenrad, das von einer elektrischen Maschine angetrieben wird und auf ein Verfahren zur Herstellung der Wasserpumpe.

### Stand der Technik

Wasserpumpen umfassen allgemein einen Stator und einen Rotor. Der Rotor steht mit einem Pumpenrad zu Bewegung eines Fluids in Verbindung. Das Fluid tritt durch einen Einlass in einer Spirale in die Pumpe ein, wird mit einem Pumpenrad in Kontakt gebracht und durch einen Auslass in der Spirale hindurch bewegt. Der Rotor und der Stator sind in einem Gehäuse enthalten, das mit der Spirale verbunden ist. Allgemein sind der Rotor und der Stator durch einen magnetischen Luftspalt getrennt, und der Rotor und der Stator enthalten Seltenerdmetalle, so dass der magnetische Luftspalt zwischen dem Rotor und dem Stator überbrückt werden kann, so dass der Rotor während der Verwendung gedreht wird und so dass der Rotor, der Stator oder beide während der Verwendung gegen die Fluide isoliert sind und weiter arbeiten. Die Verwendung von Seltenerdmetallen kann jedoch durch das Fluid beeinträchtigt werden, so dass die Seltenerdmetalle möglicherweise eine zusätzliche Kapselung benötigen, um eine Beschädigung zu verhindern.

Die US 9360015 B1 offenbart eine elektrische Wasserpumpe und insbesondere eine elektrische Wasserpumpe mit einer verbesserten Nassbüchse, so dass die Wasserpumpe kein Gehäuse aufweist. Die elektrische Wasserpumpe umfasst einen Pumpenrotor mit einer Welle. Eine Nassbüchse umgibt den Rotor und weist einen Deckel, eine Büchse, in der der Rotor untergebracht ist, und einen Sitz, der mit der Welle des Rotors in Verbindung steht, so dass der Sitz das Stützen der Welle auf einem Stator unterstützt, auf. Eine Spirale, die die Nassbüchse und den Rotor umgibt, bedeckt einen oberen Abschnitt des Rotors, der Nassbüchse und des Stators. Die elektrische Wasserpumpe umfasst ferner eine Gummikappe, die einen unteren Abschnitt des Rotors, der Nassbüchse und des Stators abdeckt und mit der Spirale unter Bildung einer Abdeckung in Verbindung steht.

Die EP 1 422 809 A2 betrifft eine Wasserpumpe mit einem von einer elektrischen Maschine angetriebenen Pumpenrad, die einen Gehäusedeckel und eine Spirale mit einem Ein- und einem Auslass, sowie eine Kappe aufweist. Ein Stator und ein Rotor der elektrischen Maschine und eine von einem Kappenehäuse bedeckte elektronische Platine sind in der Kappe untergebracht. Das Statorpaket, Drähte und Stecker sind mit einem Kunststoffmaterial umspritzt.

Ähnliche Anordnungen zeigen DE 10 2006 008 423 A1, DE 4 109 548 A1, EP 2 882 077 A1, CN 105 262 263 A, CN 105 337 454 A, WO 2008/072438 A1 und WO 2004/008603 A2.

Die Aufgabe der Erfindung besteht darin, eine Wasserpumpe mit einer optimierten Konstruktion, insbesondere mit integrierten Teilen, bereitzustellen.

Die Erfindung wird durch die unabhängigen Ansprüche definiert.

Die bereitgestellte Lösung ist eine Wasserpumpe mit einem Pumpenrad, das von einer elektrischen Maschine angetrieben wird, die einen Gehäusedeckel und eine Spirale mit einem Einlass und einem Auslass und eine Kappe, in der ein Stator und ein Rotor der elektrischen Maschine untergebracht sind und die eine elektronische Platine, die an der Seite von dem Pumpenrad getrennt befestigt ist und von dem Gehäusedeckel bedeckt wird, aufweist, umfasst, wobei das Statorpaket mit einem ersten Kunststoffmaterial umspritzt ist und mindestens das Statorpaket, die Drähte und die Stecker mit einem zweiten Kunststoffmaterial zur Ausbildung einer zylindrischen Ringkappe und eines Kühlkörpers, der eine zylindrische Öffnung der Kappe abdichtet, umspritzt sind.

Die Erfindung ermöglicht eine Vorrichtungsanordnung mit reduzierten Teilen und reduziertem Aufwand. Aufgrund der Tatsache, dass Teile komplett umspritzt sind, ist die Wärmeübertragung besser. Dies liegt auch darin begründet, dass im Vergleich zu standardmäßigen Druckgusspumpen die Abmessungen reduziert sein können und das Gewicht der Wasserpumpe geringer ist. Die Pumpe weist eine hohe Schwingungsfestigkeit auf.

Durch die komplette Umspritztung des Stators wird die zwischen den Komponenten, wie z. B. Statorpaket, Steckern und Kupferdrähten, eingeschlossene Luft beseitigt, wodurch die Wärmeableitung erhöht wird. Es ist erfindungsgemäß, dass der Kühlkörper eine separate Vorrichtung ist, die eine Rotorwelle trägt. Durch die einfache Anordnung wird mindestens auf eine Dichtung verzichtet.

Alternativ dazu ist es denkbar, aber nicht beansprucht, dass der Kühlkörper mit der Kappe zusammengeformt ist. In diesem Falle einer Pumpenvariante für eine Niedrigtemperaturanwendung ist auch der Kühlkörper integriert und es könnte auf zwei Dichtungen verzichtet werden.

Es ist von Vorteil, dass die elektronische Platine bei einem Verfahren zur Herstellung der Wasserpumpe zusammen mit dem Stator umspritzt wird. Das Volumen der in der Kammer der elektronischen Platine eingeschlossenen Luft ist aus zwei Gründen reduziert worden: Erhöhen der Wärmeübertragung und Reduzieren des Gesamtvolumens für den Fall, dass es dahingehend mit Harz gefüllt werden muss, die Komponenten für Motormontageanwendungen stabil zu halten.

Es ist von Vorteil, dass die Kappe einen Rand aufweist, der eine Verbindung der Spirale und des Deckelgehäuses gestattet. Die Verbindung erfolgt durch eine Schnappkonstruktion zur Sicherung des Deckelgehäuses und der Spirale in einer stabilen Position ohne den Bedarf an Schrauben/Verschraubungsarbeitsgängen.

Zu diesem Zweck ist es von Vorteil, dass der Rand mindestens Schlitze zum Einführen von Haken umfasst.

Die Erfindung umfasst des Weiteren ein Verfahren zur Herstellung einer erfindungsgemäßen Wasserpumpe, das die folgenden Schritte umfasst:
- Umspritzen eines Statorpakets mit einem ersten Kunststoffmaterial,
- Befestigen zumindest von Drähten und Steckern,
- Umspritzen des befestigten Stators mit einem zweiten Kunststoffmaterial zur Ausbildung einer zylindrischen ringförmigen Kappe mit einem Rand,
- Abdichten der inneren zylindrischen Öffnung durch einen Kühlkörper.

### Beschreibung

Die Erfindung wird in den Figuren und der folgenden Beschreibung beschrieben.

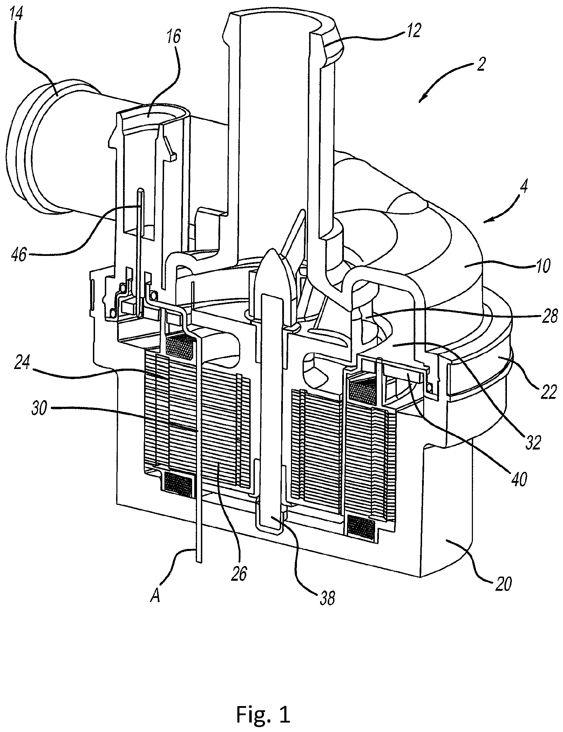

Fig. 1 zeigt eine Wasserpumpe gemäß dem Stand der Technik und stellt eine Querschnittsansicht einer gehäuselosen Wasserpumpe 2 dar,
Fig. 2 zeigt eine Wasserpumpe gemäß der Erfindung,
Fig. 3 zeigt einen Querschnitt der Wasserpumpe,
Fig. 4 und Fig. 5 zeigen eine auseinandergezogene Ansicht,
Fig. 6 zeigt

Die Wasserpumpe 2 umfasst eine Spirale 10, eine Kappe 20 und eine Befestigungsschelle 22, die die Kappe 20 und die Spirale 10 befestigt. Die Spirale 10 umfasst einen Einlass 12 und einen Auslass 14. Die Spirale umfasst einen Stromversorgungsanschluss 16.

Die Spirale 10 ist über eine Befestigungsschelle 22 unter Bildung einer Abdeckung 4, die die inneren Komponenten umgibt und einen Stromversorgungsanschluss 16 zur Unterbringung einer Versorgungsleitung 46 umfasst, mit einer Kappe 20 verbunden. Die inneren Komponenten der gehäuselosen Wasserpumpe 2 umfassen einen Stator 24, der in die Kappe 20 pressgepasst ist. Der Stator 24 umgibt einen Rotor 26. Der Rotor 26 ist durch eine Nassbüchse 30 von dem Stator 24 getrennt. Der Rotor 26 und der Stator 24 werden durch einen magnetischen Luftspalt mit einem Abstand (A) abgetrennt. Die Nassbüchse 30 verhindert, dass Fluid den Stator 24 berührt. Der Rotor 26 umfasst eine Welle 38 und ein Pumpenrad 28 zum Bewegen eines Fluids, wenn das Fluid in den Einlass 12 eintritt. Das Pumpenrad 28 bewegt das Fluid durch den Auslass 14 zur Verwendung. Eine elektronische Platine 40 ist außerhalb der Nassbüchse 30 positioniert, so dass die elektronische Platine 40 von jeglichen Fluiden innerhalb der gehäuselosen Pumpe 2 abgetrennt ist.

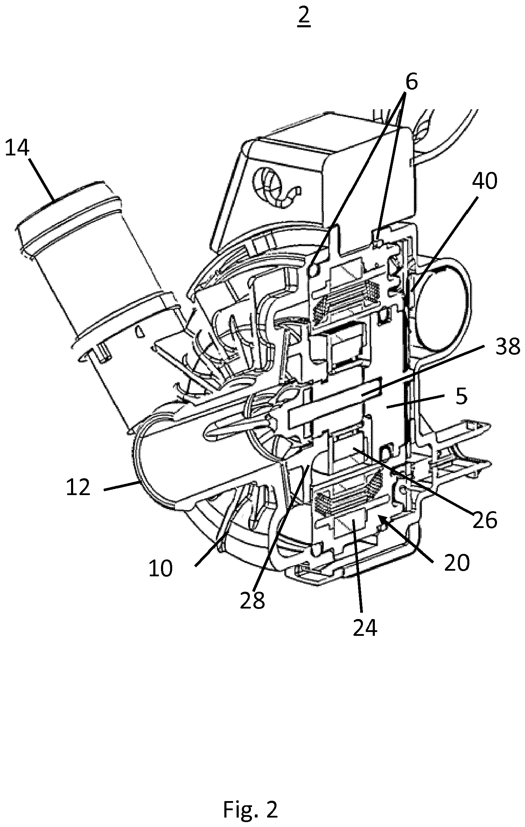

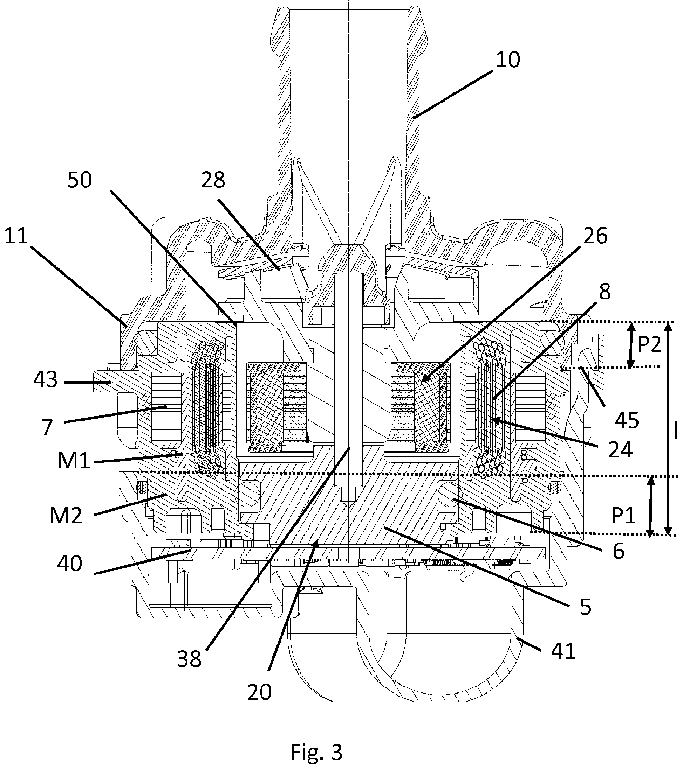

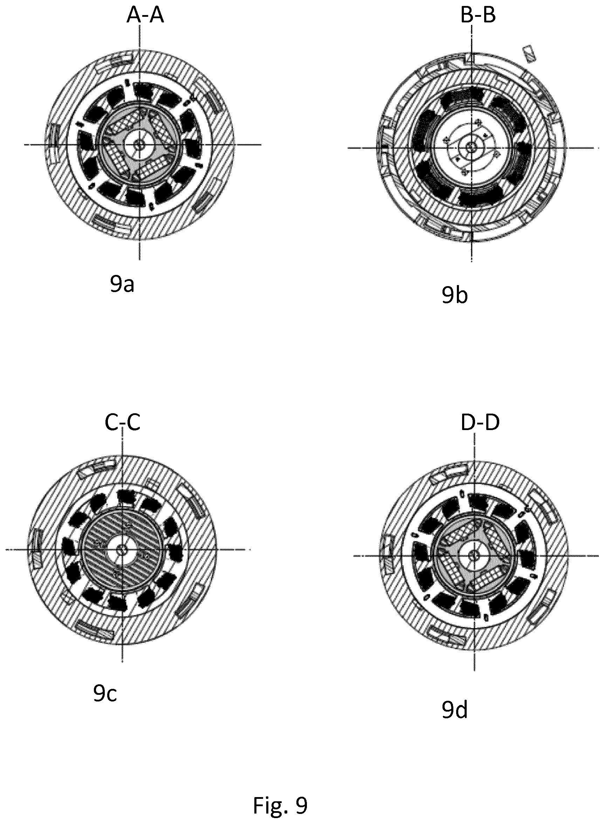

Figur 2-9 zeigen eine Ausführungsform der Wasserpumpe mit reduzierten Teilen, insbesondere ohne Nassbüchse, gemäß der Erfindung.

Die Pumpe 2 weist eine Kappe 20 auf, die verschiedene Funktionen kombiniert: die Kappe definiert den Außenumfang der Pumpe, deckt den Stator 24 ab und eine Nassbüchsenfunktion und bringt einen Rotor 26 unter. Ein Kühlkörper 5 ist in der Kappe 20 befestigt, in der eine Rotorwelle 38 sitzt. Eine Dichtung 6 in Form eines O-Rings dichtet den Kühlkörper 5 gegenüber dem Innenumfang der Kappe 20 in einer Öffnung 50 ab.

Die Kappe 20 weist die Form eines zylindrischen Rings mit der zylindrischen Öffnung 50 darin auf. In dem Ring sind die Vorrichtungen des Stators in der Öffnung positioniert, der Rotor 26 ist um die Welle 38 befestigt.

Die Pumpenkappe wird durch Umspritzen des Stators 24 erzeugt, wodurch Luftspalte zwischen den verschiedenen Komponenten, wie mindestens dem Statorpaket 7, den Versorgungssteckern 9 und den Kupferdrähten 8, beseitigt werden. Durch das Umspritzen wird die Wärmeabfuhr des Stators erhöht.

Das Statorpaket 7 wird während des Prozesses mit einem ersten Material M1 umspritzt. Bei dem ersten Material handelt es sich beispielsweise um ein Kunststoffmaterial: glasfaserverstärktes PA66-GF30. Das Material ist Faser verstärkt und weist eine gute Wärmealterungsbeständigkeit auf. Das Material M1 sollte eine hohe Steifigkeit und Formstabilität aufweisen und muss zur Erzeugung elektrisch isolierender Teile spezifiziert werden.

Nach diesem ersten Schritt des Umspritzens des Statorpakets 7 werden die Versorgungsstecker 9 eingeführt und mit den Drähten verbunden und die Wicklung der Drähte 8 ist beendet. Nach der Kontaktierung der Drähte und Stecker und einer elektrischen Steuerung wird die Baugruppe mit einem zweiten Material M2 umspritzt. Das Material M2 ist beispielsweise PPS-GF34, das eine gute Beständigkeit gegenüber Alterung, Chemikalien und Strahlung aufweist und eine Kappe bildet, die fest und starr ist.

Nach der Fertigstellung der Kappe als ein umspritztes einziges Teil wird ein Kühlkörper 5, der eine Welle 38 trägt, entlang dem Innenumfang der Kappe 20 befestigt.

Der Kühlkörper 5 wird in der Öffnung 50 mit einem O-Ring 6 gegen die Kappe abgedichtet.

In einer nicht erfindungsgemäßen Ausführung kann alternativ zu der Lösung mit dem separaten Kühlkörper 5 der Boden der Kappe durch den Formungsprozess verschlossen werden und einen Sitz für die Welle 38 umfassen. Diese geschlossene Lösung könnte angewendet werden, wenn Temperaturen unter etwa 90° liegen, wodurch ein Teil erzeugt wird, das den Abdichtungsbedarf reduziert.

Eine elektronische Platine 40 wird auf der Fläche der Kappe 20 bei dem Kühlkörper 5 von dem Abschnitt des Pumpenrads 28 weg befestigt.

Das Volumen der um die elektronische Platine 40 herum eingeschlossenen Luft wird reduziert. Dies führt zu einer verbesserten Wärmeübertragungsrate und einer Reduzierung des Gesamtvolumens der Wasserpumpe. In Fällen, in denen es nötig ist, das Volumen mit Kunststoffformmaterial zu füllen, um die Komponenten stabil zu halten, kann die elektronische Platine befestigt werden, bevor der letzte Umspritzprozess mit dem Material M2 erfolgt.

Die elektronische Platine und ein erster Abschnitt P1 der Länge l der Kappe wird mit einem Teil eines Gehäusedeckels 41 abgedeckt, ein zweiter Abschnitt P2 der Länge l der Kappe wird durch einen Teil einer Spirale 10 abgedeckt. Die Spirale und das Deckelgehäuses werden mit Ringen gegenüber dem Außenumfang der Kappe abgedichtet.

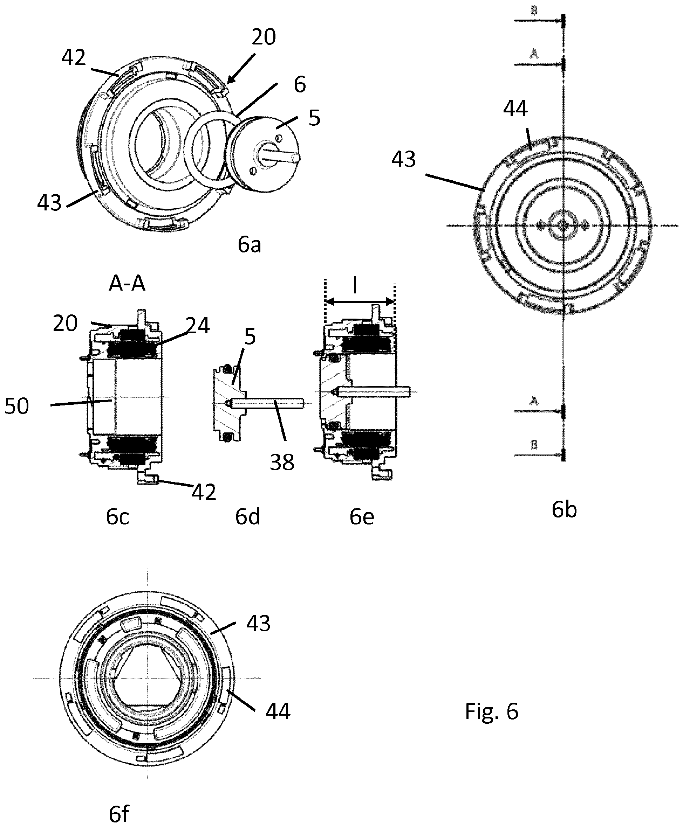

In Figur 6 werden die beiden mittigen Teile, die Kappe 20 und der Kühlkörper 5, gezeigt. Fig. 6a zeigt in einer auseinandergezogenen Ansicht die aus einem Kunststoffformmaterial hergestellte Kappe, die eine zylindrische Öffnung 50 aufweist. Die Öffnung 50, die in Fig. 6c im Querschnitt entlang A-A von Fig. 6b besser zu sehen ist, ist dazu ausgeführt, auf einer Seite von dem Kühlkörper 5 verschlossen zu werden, wie in Fig. 6b gezeigt wird. Fig. 6e ist die Situation, nach der Installation des Kühlkörpers 5 mit der Dichtung 6 in der Öffnung der Kappe. Fig. 6f zeigt eine Ansicht von dem Boden der Kappe nach der Installation des Kühlkörpers. Bei der Ausführungsform von Figur 6 wird bei dem Umspritzprozess des Stators 24 ein Rand 43 geformt.

Der Rand 43 umgibt den kompletten Umfang der Kappe 20 und erstreckt sich im Vergleich zu dem Durchmesser der Kappe in einem größeren Durchmesser. Der Rand ist Teil der Befestigung- und Fixierungsvorrichtungen, die später erörtert werden. Der Rand 43 umfasst bei dieser Ausführungsform vier Nasen 42, die Schlitze 44 in dem Rand umgeben. Die Schlitze sind entlang einer radialen Länge angeordnet und folgen den Radien der Kappe. Die Nasen 42 sind als Wände ausgebildet, die die Schlitze 44 an dem Außenumfang des Rands und zum Teil zwei Endseiten des Schlitzes umgeben.

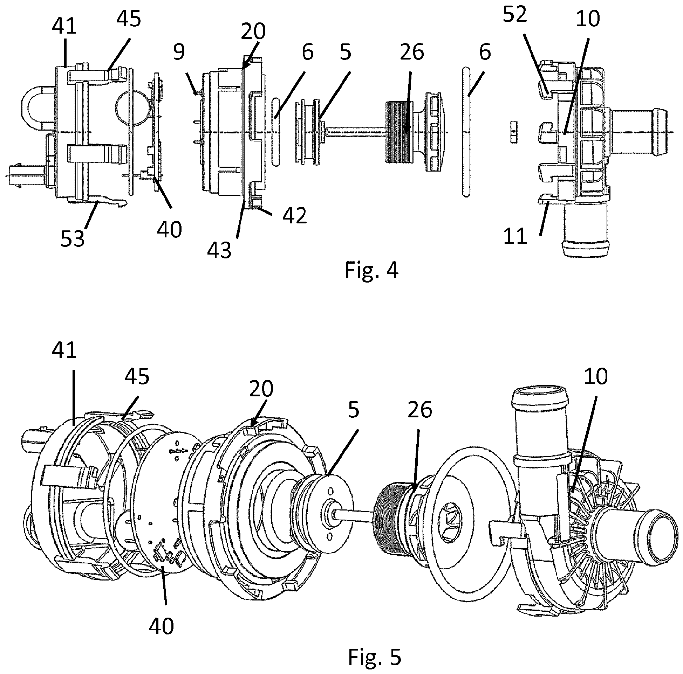

In Figur 4 und 5 werden die Teile der gesamten Wasserpumpe in einem auseinandergezogenen Schema gezeigt. Auf der rechten Seite wird die Spirale 10 als Teil der fertigen Wasserpumpe gezeigt. Diese Spirale 10 umfasst axiale Haken 11, die an dem Außenumfang der Vorrichtung angeordnet sind. Die axialen Haken 11 werden durch L-förmige Hakenstrukturen 52 definiert und wobei sich die Haken entlang dem Durchmesser der Spirale 10 erstrecken. Die Öffnungen der Hakenstrukturen 52 sind um den Durchmesser herum angeordnet, so dass die Hakenöffnungen, die Richtung des kleineren Arms des L der beiden benachbarten axialen Haken alle voneinander beabstandet sind und in dieselbe Richtung weisen. Die Haken 11 erhöhen nicht den Durchmesser der Spirale, sondern erstrecken sich lediglich in der axialen Richtung.

Zur Montage der Wasserpumpe weist die Kappe 20 den Rahmen 43 mit den Schlitzen 44 auf. Das Deckelgehäuses 41 ist mit radialen Haken 45 konstruiert, wobei die Öffnungen der radialen Haken radial nach außerhalb des Durchmessers des Deckelgehäuses 41 ausgerichtet sind.

Die radialen Haken werden durch Zungen 53 befestigt, die an der Außenseite des Deckelgehäuses fixiert sind, wodurch eine definierte Flexibilität bereitgestellt wird. Normalerweise werden die radialen Haken in einem Schritt mit dem Deckelgehäuse geformt.

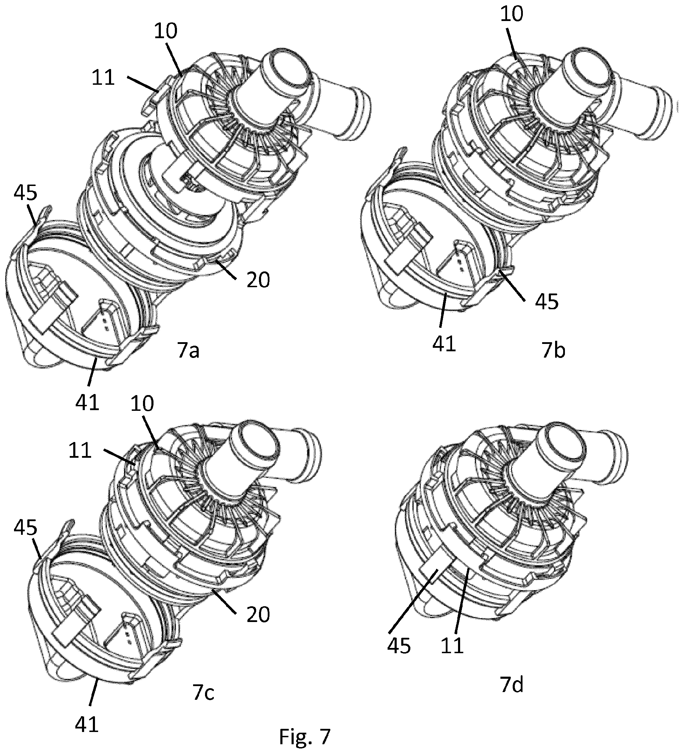

In Fig. 7, 8 und 9 wird der Befestigungsprozess der Wasserpumpe erläutert.

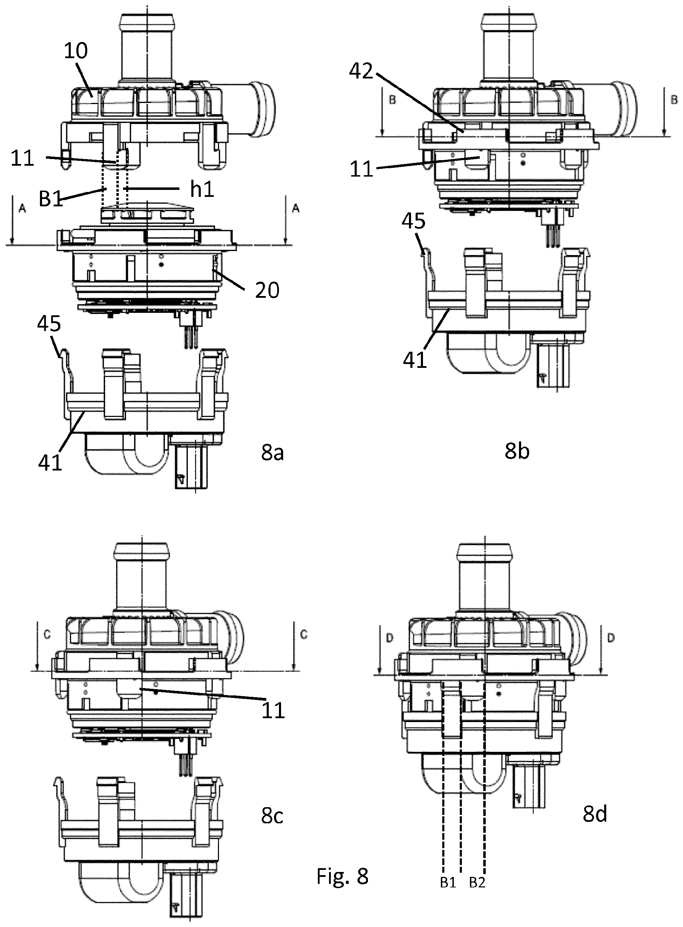

Bei einem ersten Schritt wird die Spirale 10 mit den axialen Haken 11 auf der Kappe 20 platziert und die axialen Haken 11 treten in die Schlitze des Rands 43 der Kappe ein. Zum einfachen Einführen weisen die Schlitze 44 Ränder 42 zum besseren Führen der axialen Haken 11 auf. Das Einführen der Haken 11 erfolgt so tief, dass die kleineren Arme der L-förmigen axialen Haken komplett durch die Schlitze hindurchgeführt werden. Der Schlitz ist breit genug, um ohne Weiteres mit den Haken in Eingriff zu gelangen. Dieses Einführen wird dadurch unterstützt, dass die Haken dahingehend ausgebildet sind, der Umfangskontur der Spirale zu folgen, Fig. 8a, 8b.

Bei einem zweiten Schritt werden die beiden Teile, die Kappe 20 und die Spirale 10, entlang ihrer Mittelachse in der Richtung der Öffnungen der Haken derart verdreht, dass der kleinere Arm der L-förmigen axialen Haken den Rand der Kappe überlagert, wie in Fig. 8c zu sehen ist.

Die Spirale wird somit an der Kappe fixiert.

Der Schlitz 44 in dem Rand 43 bleibt für eine Schnappverbindung mit den radialen Haken 45 des Deckelgehäuses 41 breit genug.

Die radialen Haken 45 sind flexibel und es ist möglich, sie zur Fixierung durch die Nasen der Haken, die sich nach außen erstrecken, durch den verbleibenden Raum des Schlitzes 44 zu drücken.

Das Befestigungs- und Fixierungsverfahren funktioniert mit den beiden Hakenarten in den zwei abdeckenden Teilen, die zusammen eine Breite b1 und b2 zum Ausfüllen des Raums in den Schlitzen in dem Rand aufweisen.

Die Haken des Deckelgehäuses blockieren eine Rückdrehung der Spirale in die Befestigungsausgangsposition und vollenden den Wasserpumpenmontageprozess.

### Bezugszeichen

2 Wasserpumpe
4 Abdeckung
5 Kühlkörper
6 Dichtung
7 Statorpaket
8 Drähte
9 Stecker
10 Spirale
11 axialer Haken
12 Einlass
14 Auslass
16 Stromversorgungsanschluss
20 Kappe
22 Schelle
24 Stator
26 Rotor
30 Nassbüchse
38 Welle
28 Pumpenrad
40 elektronische Platine
41 Deckelgehäuse
42 Nase
43 Rand
44 Schlitz
45 radialer Haken
46 Versorgung
50 Öffnung
52 Hakenvorrichtungen
53 Zunge
M1 erstes Material
M2 zweites Material

## Patentansprüche

1. Wasserpumpe (2) mit einem Pumpenrad (28), das von einer elektrischen Maschine angetrieben wird,
die Wasserpumpe (2) umfasst einen Gehäusedeckel (41), eine Spirale (10) mit einem Einlass (12) und einem Auslass (14), und eine Kappe (20),
in der Kappe (20) sind ein Stator (24) und ein Rotor (26) der elektrischen Maschine untergebracht
der Stator (24) umfasst ein Statorpaket (7) mit Drähten (8) und Steckern (9) zur Verbindung mit einer elektronischen Platine (40),
die elektronische Platine (40) ist an der Seite von dem Pumpenrad (28) getrennt auf der Kappe (20) befestigt und wird von dem Gehäusedeckel (41) bedeckt
**dadurch gekennzeichnet, dass** das Statorpaket (7) mit einem ersten Kunststoffmaterial (M1) umspritzt ist,
dass mindestens das Statorpaket (7), die Drähte (8) und die Stecker (9) mit einem zweiten Kunststoffmaterial (M2) umspritzt sind, sodass die Kappe (20) die Form eines zylindrischen Rings mit einer zylindrischen Öffnung (50) darin aufweist, und
dass ein Kühlkörper (5) vorgesehen ist, der die zylindrische Öffnung (50) abdichtet, wobei
der Kühlkörper (5) eine separate Vorrichtung ist, die eine Rotorwelle (38) trägt und wobei die elektronische Platine (40) auf der Fläche der Kappe (20) bei dem Kühlkörper (5) von dem Abschnitt des Pumpenrads (28) weg befestigt wird, so dass das Volumen der um die elektronische Platine (40) herum eingeschlossenen Luft reduziert wird.

2. Wasserpumpe (2) nach Anspruch 1, **dadurch gekennzeichnet, dass** der Kühlkörper (5) mit einem O-Ring (6) abgedichtet ist.

3. Wasserpumpe (2) nach Anspruch 1 oder 2, **dadurch gekennzeichnet, dass** die elektronische Platine (40) zusammen mit dem Stator (24) umspritzt wird.

4. Wasserpumpe (2) nach einem der vorhergehenden Ansprüche, **dadurch gekennzeichnet, dass** die Kappe (20) einen sich radial erstreckenden Rand (43) aufweist, der eine Verbindung der Spirale (10) und des Gehäusedeckels (41) gestattet.

5. Wasserpumpe (2) nach einem der vorhergehenden Ansprüche, **dadurch gekennzeichnet, dass** der Rand (43) mindestens Schlitze (44) umfasst.

6. Verfahren zur Herstellung einer Wasserpumpe (2) gemäß den vorhergehenden Ansprüchen, das die folgenden Schritte umfasst:
• Umspritzen eines Statorpakets (7) mit einem ersten Kunststoffmaterial (M1),
• Befestigen zumindest von Drähten (8) und Steckern (9),
• Umspritzen des befestigten Stators (24) mit einem zweiten Kunststoffmaterial (M2) zur Ausbildung einer zylindrischen ringförmigen Kappe (20) mit einem Rand (43),
• Abdichten der inneren zylindrischen Öffnung (50) durch einen Kühlkörper (5).

7. Verfahren nach Anspruch 6, wobei die elektronische Platine (40) zusammen mit den Teilen des Stators (24) umspritzt wird.

## Claims

1. Water pump (2) with a pump wheel (28) driven by an electric machine,
the water pump (2) comprises a housing cover (41), a spiral (10) with an inlet (12) and an outlet (14), and a cap (20),
a stator (24) and a rotor (26) of the electric machine are housed within the cap (20),
the stator (24) comprises a stator package (7) with wires (8) and plug connectors (9) for connection to an electronic circuit board (40),
the electronic circuit board (40) is mounted separately on the cap (20) on the side of the pump wheel (28) and is covered by the housing cover (41)
**characterised in that** the stator package (7) is overmoulded with a first plastic material (M1),
that at least the stator package (7), the wires (8) and the plug connectors (9) are overmoulded with a second plastic material (M2) so that the cap (20) has the shape of a cylindrical ring with a cylindrical opening (50) therein, and
that a heat sink (5) is provided which seals the cylindrical opening (50), wherein
the heat sink (5) is a separate device which carries a rotor shaft (38) and wherein the electronic circuit board (40) is fastened to the surface of the cap (20) near the heat sink (5), away from the section of the pump wheel (28), so that the volume of the air enclosed around the electronic circuit board (40) is reduced.

2. Water pump (2) according to claim 1, **characterised in that** the heat sink (5) is sealed with an O-ring (6).

3. Water pump (2) according to claim 1 or 2, **characterised in that** the electronic circuit board (40) is overmoulded together with the stator (24).

4. Water pump (2) according to one of the previous claims,
**characterised in that** the cap (20) has a radially extending rim (43) which allows the spiral (10) to be connected to the housing cover (41).

5. Water pump (2) according to one of the previous claims, **characterised in that** the rim (43) includes at least slits (44).

6. Method for manufacturing a water pump (2) according to the preceding claims which comprises the following steps:
• overmoulding a stator package (7) with a first plastic material (M1),
• fastening at least wires (8) and plug connectors (9),
• overmoulding the attached stator (24) with a second plastic material (M2) to form a cylindrical annular cap (20) with a rim (43),
• sealing the inner cylindrical opening (50) by means of a heat sink (5).

7. Method according to claim 6, wherein the electronic circuit board (40) is overmoulded together with the parts of the stator (24).

## Revendications

1. Pompe à eau (2) avec une roue (28) de pompe, qui est entraînée par une machine électrique, dans laquelle
la pompe à eau (2) comprend un couvercle (41) de carter, une hélice (10) avec une entrée (12) et une sortie (14), et un capot (20),
un stator (24) et un rotor (26) de la machine électrique sont logés dans le capot (20),
le stator (24) comprend un bloc statorique (7) avec des fils (8) et des connecteurs (9) pour le raccordement à une carte électronique (40),
la carte électronique (40) est fixée sur le capot (20) de manière séparée de la roue (28) de pompe sur le côté et est recouverte du couvercle (41) de carter,
**caractérisée en ce que** le bloc statorique (7) est enrobé d'un premier matériau en matière plastique (M1),
qu'au moins le bloc statorique (7), les fils (8) et les connecteurs (9) sont enrobés d'un deuxième matériau en matière plastique (M2) si bien que le capot (20) présente la forme d'un anneau cylindrique avec une ouverture cylindrique (50) dans celui-ci, et
qu'un corps de refroidissement (5) est prévu, qui étanchéifie l'ouverture cylindrique (50), dans laquelle
le corps de refroidissement (5) est un dispositif séparé, qui supporte un arbre (38) de rotor et dans laquelle la carte électronique (40) est fixée sur la surface du capot (20) à proximité du corps de refroidissement (5) de manière à s'éloigner de la section de la roue (28) de pompe de manière à réduire le volume d'air inclus tout autour de la carte électronique (40).

2. Pompe à eau (2) selon la revendication 1, **caractérisée en ce que** le corps de refroidissement (5) est étanchéifié avec un joint torique (6).

3. Pompe à eau (2) selon la revendication 1 ou la revendication 2, **caractérisée en ce que**
la carte électronique (40) est enrobée conjointement avec le stator (24).

4. Pompe à eau (2) selon l'une quelconque des revendications précédentes, **caractérisée en ce que** le capot (20) présente un bord (43) s'étendant radialement, qui autorise un raccordement de l'hélice (10) et du couvercle (41) de carter.

5. Pompe à eau (2) selon l'une quelconque des revendications précédentes, **caractérisée en ce que** le bord (43) comprend au moins des entailles (44).

6. Procédé de fabrication d'une pompe à eau (2) selon les revendications précédentes, qui comprend les étapes suivantes :
- l'enrobage d'un bloc statorique (7) d'un premier matériau de matière plastique (M1),
- la fixation au moins de fils (8) et de connecteurs (9),
- l'enrobage du stator (24) fixé d'un deuxième matériau de matière plastique (M2) pour réaliser un capot (20) annulaire cylindrique avec un bord (43),
- l'étanchéification de l'ouverture cylindrique (50) intérieure par un corps de refroidissement (5).

7. Procédé selon la revendication 6, dans lequel la carte électronique (40) est enrobée conjointement avec les parties du stator (24).
